# EUROPEAN PATENT SPECIFICATION

(11) **EP 3 850 482 B1**
(45) Date of publication and mention of the grant of the patent: **25.11.2026**
(21) Application number: 19860077.7
(22) Date of filing: 10.09.2019
(51) Int. Cl.: G06Q 10/00, G06Q 10/04, G06Q 10/06, G06Q 30/00

(54) **METHOD AND SYSTEM TO PREDICT WORKLOAD DEMAND IN A CUSTOMER JOURNEY APPLICATION**
VERFAHREN UND SYSTEM ZUR VORHERSAGE DER ARBEITSLASTANFORDERUNG EINER KUNDENREISEANWENDUNG
PROCÉDÉ ET SYSTÈME POUR PRÉDIRE UNE DEMANDE DE CHARGE DE TRAVAIL DANS UNE APPLICATION DE VOYAGE CLIENT

(30) Priority: 11.09.2018 US 201862729856 P
(43) Date of publication of application: 21.07.2021
(73) Proprietor: Genesys Cloud Services, Inc., Menlo Park, CA 94025 (US)
(72) Inventor: GOUW, Andy Raphael, Daly City, California 94014 (US); TER, Wei Xun, Annapolis, Maryland 21401 (US); DOSHI, Naman, Annapolis, Maryland 21401 (US); HUMPHREYS, Travis, Annapolis, Maryland 21401 (US); WICAKSONO, Bayu Aji, Annapolis, Maryland 21401 (US); SMITH, Cameron David, Indianapolis, Indiana 46278 (US)
(74) Representative: FRKelly
(86) International application number: PCT/US2019/050486
(87) International publication number: WO 2020/055925

(56) References cited:
- WO-A1-02/089455
- US-A1- 2007 121 578
- US-A1- 2010 332 286
- US-A1- 2014 219 436

## Description

### BACKGROUND

The present invention generally relates to telecommunications systems and methods, as well as contact center staffing. More particularly, the present invention pertains to workload prediction of resources for contact center staffing.

US 2014/0219436 A1 discloses a computer-implemented method of predicting the operational performance of a call center system.

### CROSS REFERENCE TO RELATED APPLICATION

This application claims the benefit of U.S. Provisional Patent Application No. 62/729,856, titled "METHOD AND SYSTEM TO PREDICT WORKLOAD DEMAND IN A CUSTOMER JOURNEY APPLICATION", filed in the U.S. Patent and Trademark Office on September 11, 2018.

### SUMMARY

The invention sets out a computer implemented method for routing an inbound interaction from an end user device in a contact center environment to an agent device according to claim 1. Advantageous embodiments are set out in the dependent claims.

### BRIEF DESCRIPTION OF THE DRAWINGS

Figure 1 is a diagram illustrating an embodiment of a communication infrastructure.
Figure 2 is a diagram illustrating an embodiment of a workforce management architecture.
Figure 3 is a flowchart illustrating an embodiment of a process for creating a model for workload demand prediction.
Figure 4A is a directed graph representation of an embodiment of a journey.
Figure 4B is an embodiment of an adjacent graph representation.
Figure 4C is an embodiment of an adjacent graph representation.
Figure 5 is a flowchart illustrating an embodiment of a process for deriving sequence-zeroes.
Figure 6 is a flowchart illustrating an embodiment of a process for deriving stage history.
Figure 7 is a flowchart illustrating an embodiment of a process for demand-flushing.
Figure 8A is a diagram illustrating an embodiment of a computing device.
Figure 8B is a diagram illustrating an embodiment of a computing device.

### DETAILED DESCRIPTION

For the purposes of promoting an understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

Customer interaction management in a contact center environment comprises managing interactions between parties, for example, customers and agents, customers and bots, or a mixture of both. This may occur across any number of channels in the contact center, tracking and targeting the best possible resources (agent or self-service) based on skills and/or any number of parameters. Reporting may be done on channel interactions in real-time and in a historical manner. All interactions that a customer takes relating to the same service, need, or purpose may be described as the customer's journey. Analytics around the customer's journey may be referred to herein and in the art as 'journey analytics'. For example, if a customer is browsing company A's e-store website, logs in with their credentials, makes a purchase, and then calls the company A customer-support line within a certain period from that online-purchase action, there is a high probability the customer is calling about that online purchase (e.g., inquiring why the item has not shipped, upgrading to overnight shipping, cancelling the order, etc.). All interactions made by the customer in this example comprise one journey. A 'journey analytics' platform may be used for analyzing the end-to-end journey of a customer throughout interactions with a given entity (e.g., a website, a business, a contact center, an IVR) over a period of time.

The ability to determine in advance whether a majority of calls made over the customer-support line are about shipping inquiries can provide Company A the opportunity to take proactive action such as sending a notification to customers via a channel (e.g. email, SMS, callback, etc.) In this example, Company A might send an order confirmation, tracking numbers, and/or possibilities to upgrade shipping methods.

Recognizing the moment in a customer's journey and taking actions proactively can provide better customer service and outcomes. The need to visually and statistically report on succession of events as a customer progresses through stages is also important to a business planning its resources through forecasting of demand and workload of the resources.

### Contact Center Systems

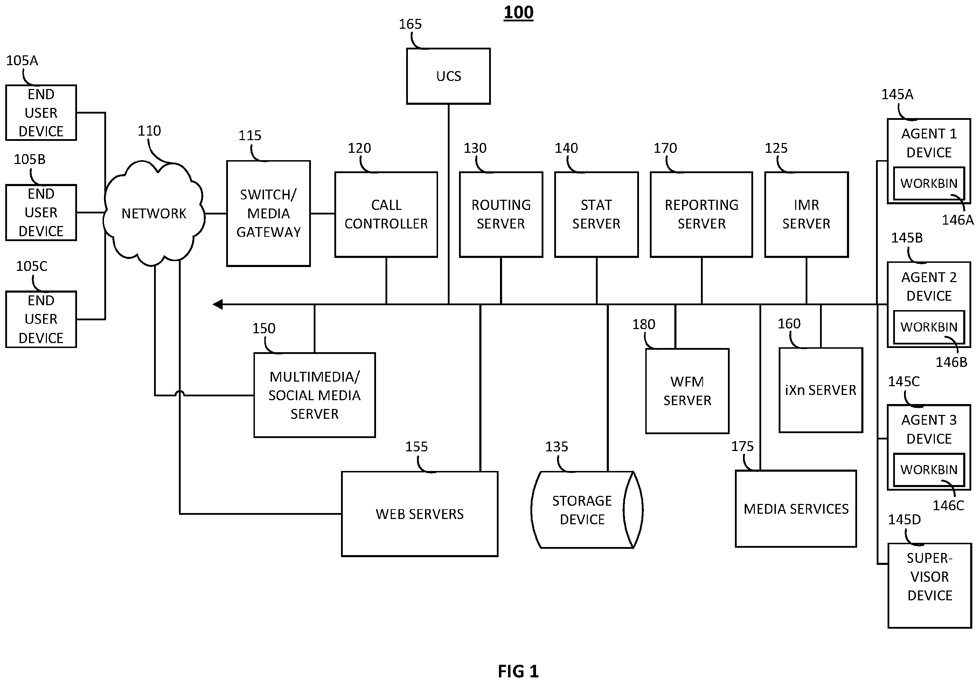

Figure 1 is a diagram illustrating an embodiment of a communication infrastructure, indicated generally at 100. For example, Figure 1 illustrates a system for supporting a contact center in providing contact center services. The contact center may be an in-house facility to a business or enterprise for serving the enterprise in performing the functions of sales and service relative to the products and services available through the enterprise. In another aspect, the contact center may be operated by a third-party service provider. In an embodiment, the contact center may operate as a hybrid system in which some components of the contact center system are hosted at the contact center premises and other components are hosted remotely (e.g., in a cloud-based environment). The contact center may be deployed on equipment dedicated to the enterprise or third-party service provider, and/or deployed in a remote computing environment such as, for example, a private or public cloud environment with infrastructure for supporting multiple contact centers for multiple enterprises. The various components of the contact center system may also be distributed across various geographic locations and computing environments and not necessarily contained in a single location, computing environment, or even computing device.

Components of the communication infrastructure indicated generally at 100 include: a plurality of end user devices 105A, 105B, 105C; a communications network 110; a switch/media gateway 115; a call controller 120; an IMR server 125; a routing server 130; a storage device 135; a stat server 140; a plurality of agent devices 145A, 145B, 145C comprising workbins 146A, 146B, 146C, one of which may be associated with a contact center admin or supervisor 145D; a multimedia/social media server 150; web servers 155; an iXn server 160; a UCS 165; a reporting server 170; and media services 175.

In an embodiment, the contact center system manages resources (e.g., personnel, computers, telecommunication equipment, etc.) to enable delivery of services via telephone or other communication mechanisms. Such services may vary depending on the type of contact center and may range from customer service to help desk, emergency response, telemarketing, order taking, etc.

Customers, potential customers, or other end users (collectively referred to as customers or end users) desiring to receive services from the contact center may initiate inbound communications (e.g., telephony calls, emails, chats, etc.) to the contact center via end user devices 105A, 105B, and 105C (collectively referenced as 105). Each of the end user devices 105 may be a communication device conventional in the art, such as a telephone, wireless phone, smart phone, personal computer, electronic tablet, laptop, etc., to name some non-limiting examples. Users operating the end user devices 105 may initiate, manage, and respond to telephone calls, emails, chats, text messages, web-browsing sessions, and other multi-media transactions. While three end user devices 105 are illustrated at 100 for simplicity, any number may be present.

Inbound and outbound communications from and to the end user devices 105 may traverse a network 110 depending on the type of device that is being used. The network 110 may comprise a communication network of telephone, cellular, and/or data services and may also comprise a private or public switched telephone network (PSTN), local area network (LAN), private wide area network (WAN), and/or public WAN such as the Internet, to name a non-limiting example. The network 110 may also include a wireless carrier network including a code division multiple access (CDMA) network, global system for mobile communications (GSM) network, or any wireless network/technology conventional in the art, including but not limited to 3G, 4G, LTE, etc.

In an embodiment, the contact center system includes a switch/media gateway 115 coupled to the network 110 for receiving and transmitting telephony calls between the end users and the contact center. The switch/media gateway 115 may include a telephony switch or communication switch configured to function as a central switch for agent level routing within the center. The switch may be a hardware switching system or a soft switch implemented via software. For example, the switch 115 may include an automatic call distributor, a private branch exchange (PBX), an IP-based software switch, and/or any other switch with specialized hardware and software configured to receive Internet-sourced interactions and/or telephone network-sourced interactions from a customer, and route those interactions to, for example, an agent telephony or communication device. In this example, the switch/media gateway establishes a voice path/connection (not shown) between the calling customer and the agent telephony device, by establishing, for example, a connection between the customer's telephony device and the agent telephony device.

In an embodiment, the switch is coupled to a call controller 120 which may, for example, serve as an adapter or interface between the switch and the remainder of the routing, monitoring, and other communication-handling components of the contact center. The call controller 120 may be configured to process PSTN calls, VoIP calls, etc. For example, the call controller 120 may be configured with computer-telephony integration (CTI) software for interfacing with the switch/media gateway and contact center equipment. In an embodiment, the call controller 120 may include a session initiation protocol (SIP) server for processing SIP calls. The call controller 120 may also extract data about the customer interaction, such as the caller's telephone number (e.g., the automatic number identification (ANI) number), the customer's internet protocol (IP) address, or email address, and communicate with other components of the system 100 in processing the interaction.

In an embodiment, the system 100 further includes an interactive media response (IMR) server 125. The IMR server 125 may also be referred to as a self-help system, a virtual assistant, etc. The IMR server 125 may be similar to an interactive voice response (IVR) server, except that the IMR server 125 is not restricted to voice and additionally may cover a variety of media channels. In an example illustrating voice, the IMR server 125 may be configured with an IMR script for querying customers on their needs. For example, a contact center for a bank may tell customers via the IMR script to 'press 1' if they wish to retrieve their account balance. Through continued interaction with the IMR server 125, customers may be able to complete service without needing to speak with an agent. The IMR server 125 may also ask an open-ended question such as, "How can I help you?" and the customer may speak or otherwise enter a reason for contacting the contact center. The customer's response may be used by a routing server 130 to route the call or communication to an appropriate contact center resource.

If the communication is to be routed to an agent, the call controller 120 interacts with the routing server (also referred to as an orchestration server) 130 to find an appropriate agent for processing the interaction. The selection of an appropriate agent for routing an inbound interaction may be based, for example, on a routing strategy employed by the routing server 130, and further based on information about agent availability, skills, and other routing parameters provided, for example, by a statistics server 140.

In an embodiment, the routing server 130 may query a customer database, which stores information about existing clients, such as contact information, service level agreement (SLA) requirements, nature of previous customer contacts and actions taken by the contact center to resolve any customer issues, etc. The database may be, for example, Cassandra or any NoSQL database, and may be stored in a mass storage device 135. The database may also be a SQL database and may be managed by any database management system such as, for example, Oracle, IBM DB2, Microsoft SQL server, Microsoft Access, PostgreSQL, etc., to name a few non-limiting examples. The routing server 130 may query the customer information from the customer database via an ANI or any other information collected by the IMR server 125.

Once an appropriate agent is identified as being available to handle a communication, a connection may be made between the customer and an agent device 145A, 145B and/or 145C (collectively referenced as 145) of the identified agent. While three agent devices are illustrated in Figure 1 for simplicity, any number of devices may be present. Collected information about the customer and/or the customer's historical information may also be provided to the agent device for aiding the agent in better servicing the communication and additionally to the contact center admin/supervisor device 145D for managing the contact center, including scheduling staff to handle workload. **In** this regard, each device 145 may include a telephone adapted for regular telephone calls, VoIP calls, etc. The device 145 may also include a computer for communicating with one or more servers of the contact center and performing data processing associated with contact center operations, and for interfacing with customers via voice and other multimedia communication mechanisms.

The contact center system 100 may also include a multimedia/social media server 150 for engaging in media interactions other than voice interactions with the end user devices 105 and/or web servers 155. The media interactions may be related, for example, to email, vmail (voice mail through email), chat, video, text-messaging, web, social media, co-browsing, etc. The multi-media/social media server 150 may take the form of any IP router conventional in the art with specialized hardware and software for receiving, processing, and forwarding multi-media events.

The web servers 155 may include, for example, social interaction site hosts for a variety of known social interaction sites to which an end user may subscribe, such as Facebook, Twitter, Instagram, etc., to name a few non-limiting examples. In an embodiment, although web servers 155 are depicted as part of the contact center system 100, the web servers may also be provided by third parties and/or maintained outside of the contact center premise. The web servers 155 may also provide web pages for the enterprise that is being supported by the contact center system 100. End users may browse the web pages and get information about the enterprise's products and services. The web pages may also provide a mechanism for contacting the contact center via, for example, web chat, voice call, email, web real-time communication (WebRTC), etc. Widgets may be deployed on the websites hosted on the web servers 155.

In an embodiment, deferrable interactions/activities may also be routed to the contact center agents in addition to real-time interactions. Deferrable interaction/activities may comprise back-office work or work that may be performed off-line such as responding to emails, letters, attending training, or other activities that do not entail real-time communication with a customer. An interaction (iXn) server 160 interacts with the routing server 130 for selecting an appropriate agent to handle the activity. Once assigned to an agent, an activity may be pushed to the agent, or may appear in the agent's workbin 146A, 146B, 146C (collectively 146) as a task to be completed by the agent. The agent's workbin may be implemented via any data structure conventional in the art, such as, for example, a linked list, array, etc. In an embodiment, a workbin 146 may be maintained, for example, in buffer memory of each agent device 145.

In an embodiment, the mass storage device(s) 135 may store one or more databases relating to agent data (e.g., agent profiles, schedules, etc.), customer data (e.g., customer profiles), interaction data (e.g., details of each interaction with a customer, including, but not limited to: reason for the interaction, disposition data, wait time, handle time, etc.), and the like. In another embodiment, some of the data (e.g., customer profile data) may be maintained in a customer relations management (CRM) database hosted in the mass storage device 135 or elsewhere. The mass storage device 135 may take form of a hard disk or disk array as is conventional in the art.

In an embodiment, the contact center system may include a universal contact server (UCS) 165, configured to retrieve information stored in the CRM database and direct information to be stored in the CRM database. The UCS 165 may also be configured to facilitate maintaining a history of customers' preferences and interaction history, and to capture and store data regarding comments from agents, customer communication history, etc.

The contact center system may also include a reporting server 170 configured to generate reports from data aggregated by the statistics server 140. Such reports may include near real-time reports or historical reports concerning the state of resources, such as, for example, average wait time, abandonment rate, agent occupancy, etc. The reports may be generated automatically or in response to specific requests from a requestor (e.g., agent/administrator, contact center application, etc.).

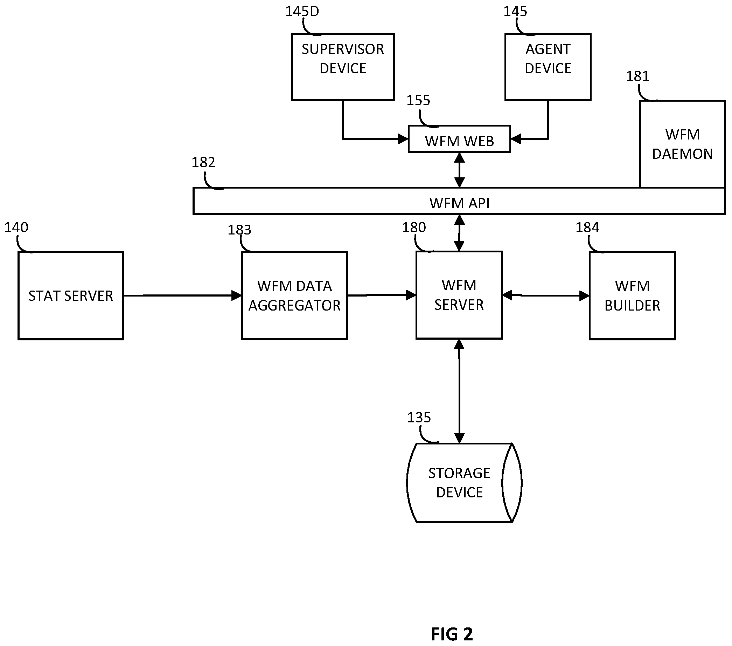

The contact center system may also include a Workforce Management (WFM) server 180. The WFM server automatically synchronizes configuration data and acts as the main data and application services source and locator for WFM clients. The WFM server 180 supports a GUI application which may be accessed from any of the agent devices 145 and a contact center admin/supervisor device 145D for managing the contact center, including accessing the journey analytics platform of the contact center. The WFM server 180 communicates with the stat server 140 and may also communicate with a configuration server for purposes of set up (not shown). In an embodiment, WFM server 180 may also be in communication with a data aggregator 184, a builder 185, a web-server 155, and a daemon 182. This is described in greater detail in Figure 2 below.

The various servers of Figure 1 may each include one or more processors executing computer program instructions and interacting with other system components for performing the various functionalities described herein. The computer program instructions are stored in a memory implemented using a standard memory device, such as for example, a random-access memory (RAM). The computer program instructions may also be stored in other non-transitory computer readable media such as, for example, a CD-ROM, flash drive, etc. Although the functionality of each of the servers is described as being provided by the particular server, a person of skill in the art should recognize that the functionality of various servers may be combined or integrated into a single server, or the functionality of a particular server may be distributed across one or more other servers without departing from the scope of the embodiments of the present invention.

In an embodiment, the terms "interaction" and "communication" are used interchangeably, and generally refer to any real-time and non-real-time interaction that uses any communication channel including, without limitation, telephony calls (PSTN or VoIP calls), emails, vmails, video, chat, screen-sharing, text messages, social media messages, WebRTC calls, etc.

The media services 175 may provide audio and/or video services to support contact center features such as prompts for an IVR or IMR system (e.g., playback of audio files), hold music, voicemails/single party recordings, multi-party recordings (e.g., of audio and/or video calls), speech recognition, dual tone multi frequency (DTMF) recognition, faxes, audio and video transcoding, secure real-time transport protocol (SRTP), audio conferencing, video conferencing, coaching (e.g., support for a coach to listen in on an interaction between a customer and an agent and for the coach to provide comments to the agent without the customer hearing the comments), call analysis, and keyword spotting.

In an embodiment, the premises-based platform product may provide access to and control of components of the system 100 through user interfaces (UIs) present on the agent devices 145A-C. Within the premises-based platform product, the graphical application generator program may be integrated which allows a user to write the programs (handlers) that control various interaction processing behaviors within the premises-based platform product.

As noted above, the contact center may operate as a hybrid system in which some or all components are hosted remotely, such as in a cloud-based environment. For the sake of convenience, aspects of embodiments of the present invention will be described below with respect to providing modular tools from a cloud-based environment to components housed on-premises.

Figure 2 is a diagram illustrating an embodiment of a workforce management architecture, indicated generally. Components may include: supervisor device 145D, agent device 145, web server 155, WFM server 180, daemon 181, API 182, data aggregator 183, builder 184, storage device 135, and stat server 140.

The web server 155 comprises a server application which may be hosted on a servlet container and provides content for a plurality of web browser-based user interfaces, (e.g., one UI may be for an agent and another UI may be for a supervisor). The appropriate interface opens after login. The supervisor UI allows for the supervisor to access features like calendar management, forecasting, scheduling, real-time agent adherence, contact center performance statistics, configuration of email notifications, and reporting. The agent UI allows for an agent to distribute schedule information (e.g., a manager to employees) and provides agents with proactive scheduling capabilities, such as entering schedule preferences, planning time off, schedule bidding, trading, etc.

The WFM server 180 automatically synchronizes configuration data and acts as the main data and application services source and locator for WFM clients. The WFM server 180 is a hub, connecting to being connected to the other components in the architecture.

The WFM Daemon 181 is a daemon configurable to send email notifications to agents and supervisors. The API 182 may facilitate integrations, changes to objects, and retrieval of information between the web server 155 and the WFM server 180.

The data aggregator 183 collects historical data from the stat server 140 and provides real-time agent-adherence information to the supervisor device 145D via the WFM server 180. Through the data aggregator's 183 connection to stat server 140, it provides a single interaction point between the WFM architecture and the contact center 100. The builder 184 builds schedules using information from the data aggregator 183.

The web server 155 serves content for the web browser-based GUI applications and generates reports upon request from users of the supervisor device 145D. The WFM server 180, daemon 181, data aggregator 183, builder 184, and web server 155 support the GUI applications. The database 135 stores all relevant configuration, forecasting, scheduling, agent adherence, performance, and historical data. Components of the WFM architecture may connect directly to the database or indirectly to it through the WFM server 180, as illustrated in Figure 2. The WFM architecture may operate in single-site environments or across multi-site enterprises.

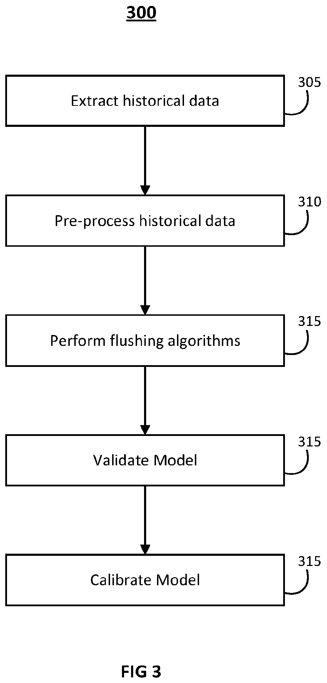

Figure 3 is a flowchart illustrating an embodiment of a process for creating a model for workload demand prediction, indicated generally at 300. The model may be used by the WFM server 180 for generating predictions of workload demand for the contact center environment 100, and output used by the supervisor/admin to allocate resources in the contact center.

In operation 305, historical data is extracted. Extraction may be performed by code written to output desired data. The extractor code works from within the workforce management application (Fig 2) and may be utilized through a button in the user interface. The extractor extracts the stage-information document object (akin to a table in a database) from the database 135. The filter used by the extractor is the same specified by the user above. The data extractor may be triggered by a user action on the front end, as described, or may also be triggered from the backend. For example, the extractor may reside as a batch service on the backend triggered by scheduled CRON job and the data to be provided may be stored at an end point such as a cloud object storage like Amazon S3. In another example, the extractor may reside as a batch service on the backend triggered by a queued request from another service.

The historical data has several requirements. For example, the stage-levels must be the closest proxy to the agents' workload because end-goal of demand-forecasting is capacity planning, including: the workload that will be generated from the volume of interactions as customer progress through stages, and the resources (e.g., Full Time Equivalent (FTE) agents) required to handle the workload in order to deliver certain KPI metric targets (e.g., service level, NPS, abandonment). In an embodiment, the journey analytics data to be extracted must be at the filter-level that output stages that closely proxies the time agent(s) actually spend servicing the stages. This may be either at the platform or event type and can be specified by a user through a user interface. Stage levels may be pre-defined by an administrator and are user customizable. In an embodiment, stage levels are a focus point of the customer journey and the transitions thereof from each state in the journey. They may be dependent on the objectives of what information is to be gleaned from the customer journey. There can also be multiple paths within the journey. Pre-defined stages may also comprise groupings of actions and any number of actions may be within a stage. In an embodiment, extracted stages levels may not be tied to an agent's time. Instead, the extracted stage levels may be tied to actions taken within the stage. For example, as a customer progresses through stages, an action may be to send a product sample to that customer when the complete a stage in the journey.

The historical data should contain required data elements, including: the journey type name, the journey type ID, the customer ID, stage, sequence, state date, end date, and time lapse. The journey type name is a string data type which describes the type of journey, for example, a "Load Request". The journey type ID is a string data type which comprises a unique ID that identifies the journey type. The customer ID is a string data type which comprises a unique ID that identifies the customer. The stage is a string data type which comprises the name of the stage. This field may be dynamic depending on the filter of the labeling strategy chosen by a user. The sequence is an integer data type comprising the number of the stage the customer is in. For example, the first stage may begin with zero and the next stage is one.

A stage may be a portion of the customer journey that is customizable to an enterprise based on identified parts of a journey that are of interest (e.g., filling in a form, running a credit check, application processing, payment, etc.) and occur in numbered sequences that can vary in order depending on preference. A stage can be an intermediate stage in a journey but in another journey, that same stage can be a 'sequence-zero'.

The start date is a date data type comprising the start date/time when a customer begins a particular stage, for example, 12/23/15 00:00 or 01/19/16 14:20. The end date is a date data type comprising the end date/time when a customer finishes/exits a particular stage, for example, 01/06/16 00:00 or 01/24/16 18:56. The time lapse may be an integer data type comprising the number of seconds between the end date and the start date. This must be a positive number since the end date is always greater or equal to the start date.

In an embodiment, the historical data output may be in CSV format or JSON file/stream with encoding UTF-8 and must be able to be de-sterilized back to Python and Java class.

Historical data should also comprise distinct tags for when a customer abandons a journey at a particular stage. Control is passed to operation 310 and the process 300 continues.

In operation 310, the historical data is pre-processed. Pre-processing comprises several preliminary calculations which are performed against the historical data. The output of the pre-processing steps is used in the stage-prediction process algorithm. Pre-processing comprises deriving adjacency graphs, deriving sequence-zeros (including calculating the abandon rate and generating volume forecasts for each sequence-zero stage), and deriving stage-histories.

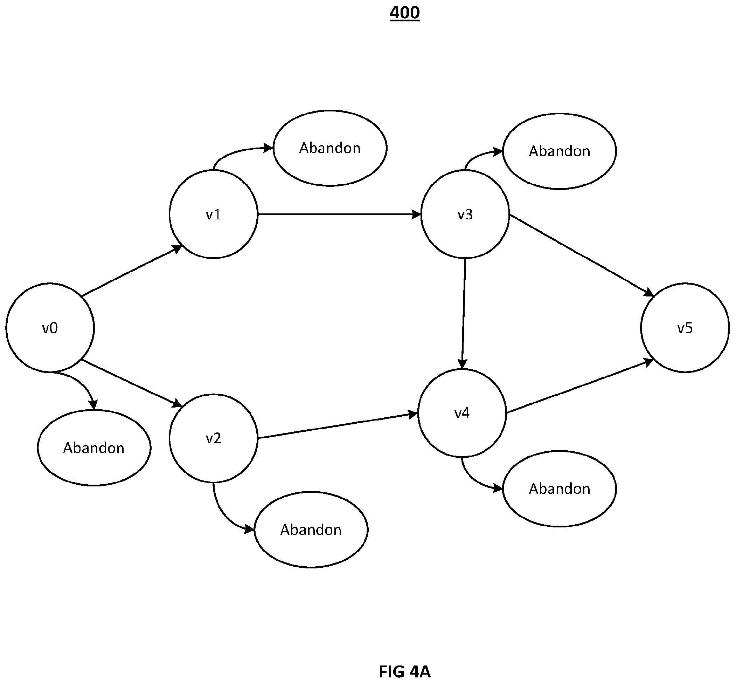

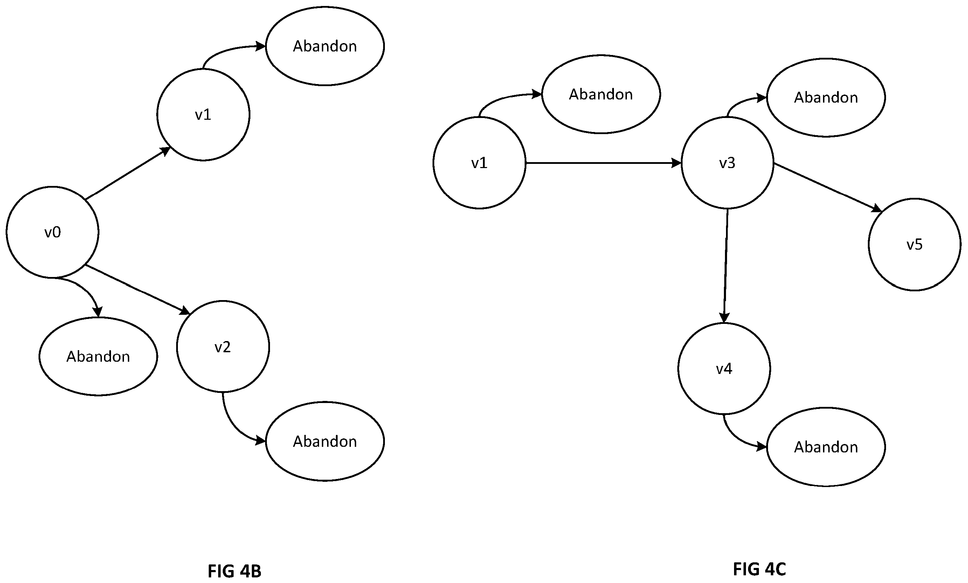

**In** the first pre-processing step, adjacency graphs are derived. To capture the relationship among journey moments, graphical representations may be used which model connections among stages in the platform. Each journey moment is a sequence or a stage which customers progress through from beginning to end. Figure 4A is a directed graph representation of an embodiment of a journey, indicated generally at 400. **In** Figure 4A, the originating stage of the entire journey is represented as v0 while the end-stage is represented as v5. Intermediate (or transition) stages are represented as v1, v2, v3, and v4 which the customer may pass into during the journey. Abandon states are also associated with each stage to pool customers who, after certain periods of time, are assumed to abandon the journey and exit the stage. Arrows between the stages represent connections in the analytics and may be modeled with adjacency graphs. The adjacency graphs model the immediate edges and nodes (pre-adjacent and post-adjacent) relative to a particular stage. Each pre-adjacent node will have its own pre-adjacent and post-adjacent nodes connected to it. The post-adjacent nodes also have their own connections of pre- and post-adjacent nodes. All connections in the graph can be deduced by iterating through the adjacency graphs list, starting from the left-most pre-adjacent stage, then to its post-adjacent nodes to the next post-adjacent nodes and so forth. Figures 4B and 4C are examples of Adjacent Graphs from the customer journey illustrated in Figure 4A. **In** Figure 4B, there are no pre-adjacent nodes to stage v0 and this is empty. Post-adjacent nodes to v0 are v1 and v2. **In** figure 4C, representing stage v3, v1 is a pre-adjacent node. Post adjacent nodes to v3 are v4 and v5. While only two Adjacent Graphs are shown for simplicity, others are possible in the journey 400. **In** other examples from the customer journey 400, stage v1 may have v0 as a pre-adjacent node and v3 as a post-adjacent node. Stage v2 may have v0 as a pre-adjacent node and v4 as a post-adjacent node. Stage v4 may have stages v2 and v3 as pre-adjacent nodes and v5 as a post-adjacent node. Stage v5 may have stages v3 and v4 as pre-adjacent nodes and no post-adjacent nodes. Adjacency graphs may be populated for every stage in a journey.

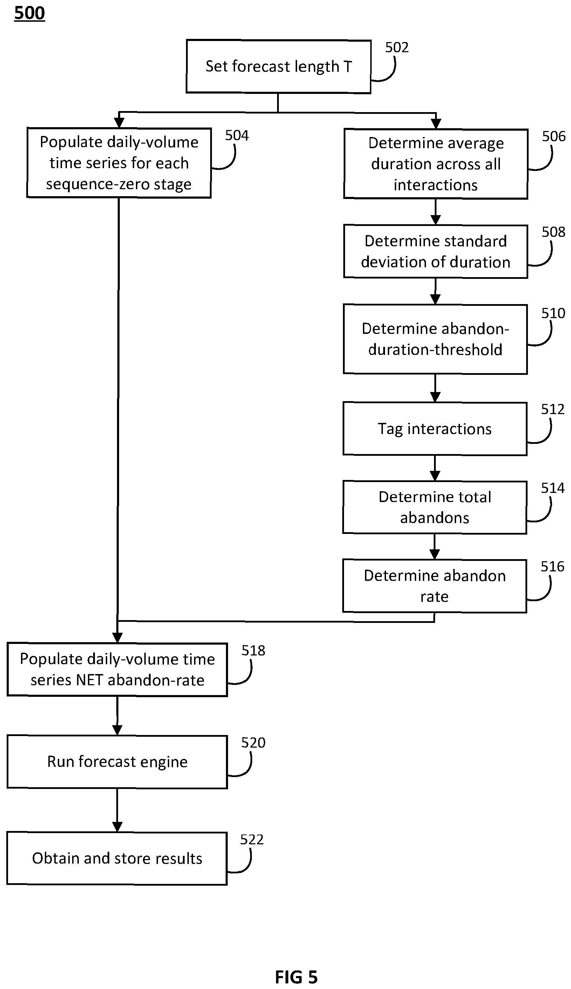

In another pre-processing step, sequence-zeroes are derived. Sequence-zeroes can be described as the stage in which a customer starts their journey. This is the first stage in the progression of sequences. A stage can be an intermediate stage in a journey, but in another journey, that same stage can be a sequence-zero. Therefore, being a sequence-zero stage does not preclude the possibility of becoming an intermediate stage. Figure 5 is a flowchart illustrating an embodiment of a process for deriving sequence-zeroes, indicated generally at 500. Sequence-zeroes and their information are derived from the extracted historical data as follows.

A forecast length of a desired time period T is set 502. This comprises how far in advance the forecasts are desired. All distinct 'sequence=0" are identified from the historical data and saved in the sequence-zero list. For every stage in the sequence-zero list, the timestamp of the call/interactions from historical data are obtained and saved as a time series 504. Concurrently, from the historical data, for every stage in the sequence-zero list, the average durations of customers spent in that stage are determined across all interactions 506. Then, for every stage in the sequence-zero list, the standard deviation durations of customers spent in that stage are determined 508. The 'abandon-duration-threshold' is then determined for every stage in the sequence-zero list 510. This may be determined using the following:
$abandon duration thresholf for stage i = \frac{average duration of stage i}{k ∗ standard deviation of durations of stage i}$
where k can be any value between 1.0 to positive infinity, depending on how aggressive algorithms need to be to be categorizing/tagging an interaction as being abandoned (from the regular interaction pool) that has waited 'too long'.

For every stage in the sequence-zero list, interaction(s) are tagged that have a duration greater than the set 'abandon-threshold-duration' 512. These interactions that are tagged are counted as 'abandoned'. Then, the total number of interactions tagged as abandoned are counted for every stage in the sequence-zero list 514.

The abandon rate is next determined for every stage in the sequence-zero list 516. This may be represented as follows:
$abandon rate of stage i = \frac{total abandon volume of stage i}{total volume coming into stage i}$

The net-total-volume-history (518) is determined for every stage in the sequence-zero list using the following: 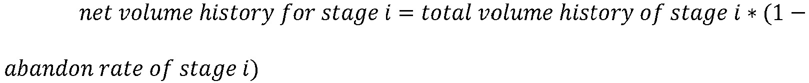 net volume history for stage i = total volume history of stage i * (1 - abandon rate of stage i)

Finally, the demand forecast-engine may be ran using the net-total-volume as history (training data for the forecast model) 520. For every stage in the sequence-zero list, the sequence-zeroes volume time series forecast results are obtained. The calculation results are stored as sequence-zeroes 522. The engine takes historical time series data to be forecasted (e.g., interaction volume) and performs feature engineering to the data, including data summarization and aggregation, data clean up (missing data imputation, leading and trailing zeroes, etc.), outlier detection, pattern detection, and selecting the best method to use given the pattern(s) found that minimizes the forecast error by way of cross-validations.

Multiple hierarchy of time dimension may be forecasted in order to get better accuracy, i.e., weekly, daily, hourly, and 5-/15-/30- minute granularity. The lower granularity forecast (e.g., weekly) is used as the baseline for higher granularity forecast by way of distribution such as distributing forecasted values to daily, hourly, and subsequent higher granularity using forecasted distributions connecting the low-to-high granularity level data. Multitudes of commonly used statistical forecasting methodologies, such as ARIMA or Holt-Winter's can be considered along with custom, proprietary ones. The best method is selected using cross-validation with multiple folds. The criteria to be used may be based on customer scoring that is a combination of accuracy and overall horizon accuracy.

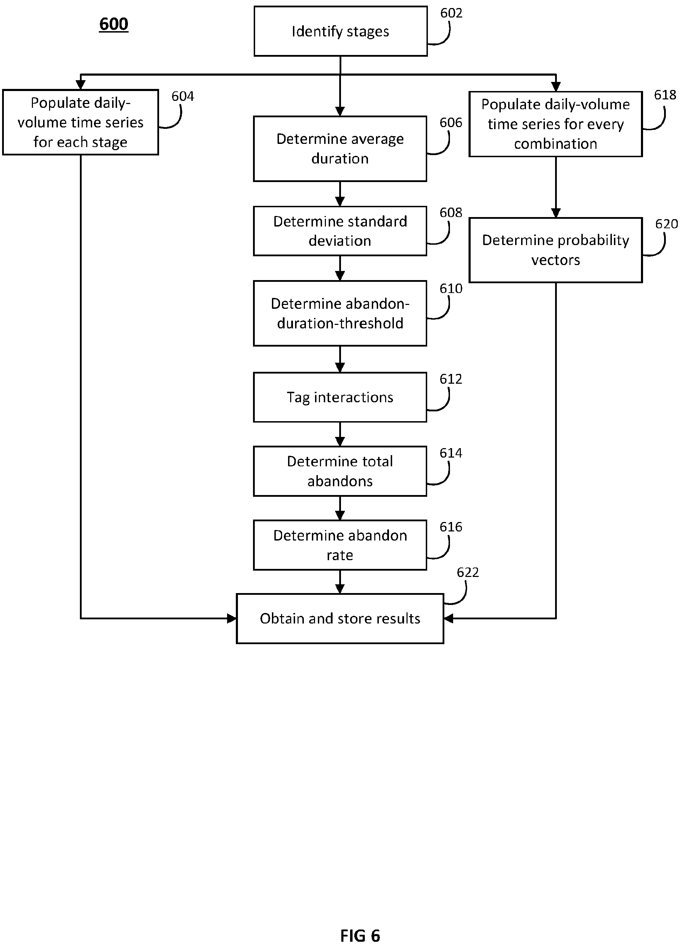

In another pre-processing step, stage-histories are derived from the extracted historical data. Each stage has its own stage-history property comprised of: historical vector count, abandon rate, and probability vector matrix. All stages have historical volume 'entering' and/or 'exiting' each and every single stage, which can be summarized in a matrix or vector representation of volume count. Each stage may also have a percentage of its historical volume that enters the stage, but not progressing to subsequent adjacent stages. This is counted towards the abandonment for that stage. Figure 6 is a flowchart illustrating an embodiment of a process for deriving stage history, indicated generally at 600.

The distinct stages are identified 602. Daily volume time-series are populated for each stage 604. The average duration for each stage is determined 606. The standard deviation for all interaction durations is determined for each stage 608. The abandon-duration-threshold is determined for each stage 610. Interaction(s) are tagged that have a duration greater than the set 'abandon-threshold-duration' 612. The total abandons are determined for each stage 614. The abandon rate is then calculated for each stage 616. This may be done using the following:
$abandon rate of stage i = \frac{total abandon volume of stage i}{total volume coming into stage i}$

The daily volume time-series for every combination of from stage- to stage is populated 618. Because these volumes that enter and exit a stage may happen across time (daily, for example), these are representable as time series data. Probability vectors (620) are determined using the following:
$probability value of stage i to stage j = \frac{volume from stage i to stage j}{total volume coming out of stage i}$

The vectors and the abandon rates are stored as stage history for each stage in the journey. Vectors are used to populate the probability vector matrix for every combination of from-to stages in the entire journey using the adjacency graphs outcome determined earlier. Control is passed to operation 315 and the process 300 continues.

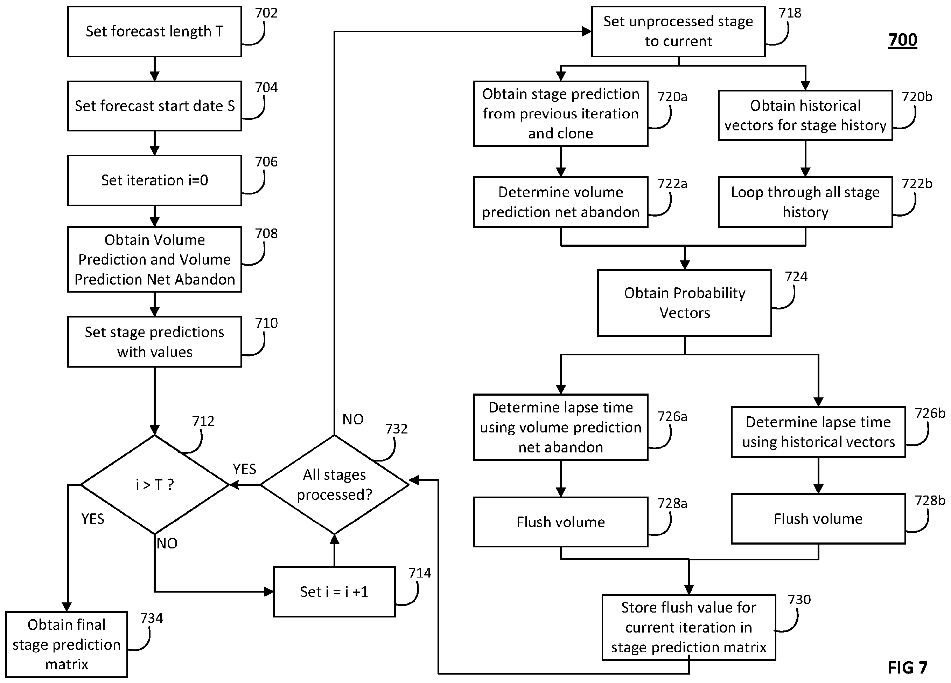

In operation 315, flushing algorithms are performed. Operation 310 must be performed before operation 315 can be performed. Referring to Figure 4A, an example journey might comprise stages v0, v1, v3, and v5. Probability vectors can be derived from such a journey, for example:
Vector A can be a representation of from stage v0 to stage v1. Vector B can be a representation from stage v1 to stage v3. Vector C can be a representation from stage v3 to stage v5. From stage v0 to stage v1, interactions may have waited 1 day before 100% of them move to stage v1. From stage v1, no interaction moves to stage v3 in a day. Instead, 100% of the interactions move to stage v3 on the second day. From stage v3, no interactions move to stage v5 in a day. 50% of interactions may move from stage v3 to stage v5 on the second day and 50% may move on the third day. Figure 7 is a flowchart illustrating an embodiment of a process for demand-flushing, indicated generally at 700. A forecast length is first determined 702. In this example, a 9 days forecast is generated. The forecast start date is then set 704, which for this example, begins from day index 0 to day index 8. Iteration i=0 is set 706. The iterations of the flushing algorithms can be illustrated as follows:
Iteration #0: all of the pre-processed stages are run from the forecast engine during the sequence-zero algorithm to obtain predicted volumes for stage v0, 708. In an embodiment, for every sequence-zero stage, the volume prediction and the volume prediction net abandon are obtained from sequence-zero. Five days of historical data for each of the stages v0, v1, v3, and v5 are used to obtain the predictions for the stage 710. The stage predictions are set with values from sequence-zero.

It is determined whether all of the iterations have been run for the forecast length. Which, in this example, they have not, so the iteration is incremented by one 714 and all of the stages are processed 732 with the next unprocessed stage set to the current processing stage 718. Stage predictions from previous iterations are obtained and cloned to the iteration's Stage Prediction 720a. and then the volume prediction net abandon is determined for every stage in the iteration 722a. Historical vectors for the stage history (from the pre-processing algorithms) are concurrently obtained 720b and all stage history is looped through with historical vectors obtained 722b. Probability vectors are obtained from the Stage-History 724. Then, each time series point of the volume prediction net abandon is looped through and the lapse time is determined as the difference between the Time Series timestamp and the forecast start date 726a. If the lapse time matches the probability vector time index and the destination matches the current stage, the volume is flushed by multiplying the volume value with the probability value 728a. Concurrently, the lapse time using historical vectors is also determined 726b and the volume is flushed 728b. to determine the lapse time, each time series point of the historical vectors is looped through and the lapse time is determined as the difference between the time series timestamp and the forecast start date. If that value has waited up to a specific time period and portion, if not all, of the volume is eligible to be flushed (determined by the probability vector distribution), then it is flushed. The flushed value for the current iteration is stored in the stage prediction matrix 730. If all of the stages have been processed (732), and all of the iterations in the forecast length have been run through (712), then the final stage prediction matrix is obtained 734. The final stage prediction matrix should contain the final state of volumes for all stages, for the entire forecast period, starting from the forecast date. Continuing with the above example, the following describes the processing of the iterations as pertaining to the journey 400.

Iteration #1: interactions arrive to stage v0 on day #0.

Iteration #2: the interactions from stage v0 day #0 flow to stage v1 day #1 at the proportion of 100%, according to probability vector A. Forecasted values of Stage v0 as a sequence-zero stage are populated.

Iteration #3: the interactions from v0 day #1 flow to stage v1 day #2 at the proportion of 100%, according to probability vector A. Forecasted values of stage v0 for day #2 as a sequence-zero stage are populated.

Iteration #4: the interactions from v0 day #2 flow to stage v1 day #3 at the proportion of 100%, according to probability vector A. Forecasted values of stage v0 for day #3 as a sequence-zero stage are populated. The interactions that were in stage v1 day #1, having spent two days in that stage, are now eligible to entirely flow to stage v3 due to probability vector B.

Iteration #5: the interactions from v0 day #3 flow to stage v1 day #4 at the proportion of 100%, according to probability vector A. Forecasted values of stage v0 for day #4 as a sequence-zero stage are populated. The interactions that were in stage v1 day #2, having spent two days in that stage, are now eligible to entirely flow to stage v3 due to probability vector B.

Iteration #6: the interactions from v0 day #4 flow to stage v1 day #5 at the proportion of 100%, according to probability vector A. Forecasted values of stage v0 for day #5 as a sequence-zero stage are populated. The interactions that were in stage v1 day #3, having spent two days in that stage, are now eligible to entirely flow to stage v3 due to probability vector B. The interactions that were in stage v3 day #3, having spent two days in that stage, are now eligible to flow 50% to stage v5 due to probability vector C.

Iteration #7: the interactions from v0 day #5 flow to stage v1 day #6 at the proportion of 100%, according to probability vector A. Forecasted values of stage v0 for day #6 as a sequence-zero stage are populated. The interactions that were in stage v1 day #4, having spent two days in that stage, are now eligible to entirely flow to stage v3 due to probability vector B. The interactions that were in stage v3 day #4, having spent two days in that stage, are now eligible to flow 50% to stage v5 due to probability vector C. Additionally, of the 50% of interactions that were in stage v3 on day #3, having spent three days in that stage, 50% of those are now eligible to also flow to v5 due to probability vector C.

Iteration #8: the interactions from v0 day #6 flow to stage v1 day #7 at the proportion of 100%, according to probability vector A. Forecasted values of stage v0 for day #7 as a sequence-zero stage are populated. The interactions that were in stage v1 day #5, having spent two days in that stage, are now eligible to entirely flow to stage v3 due to probability vector B. The interactions that were in stage v3 day #5, having spent two days in that stage, are now eligible to flow 50% to stage v5 due to probability vector C. Additionally, of the 50% of interactions that were in stage v3 on day #4, having spent three days in that stage, 50% of those are now eligible to also flow to v5 due to probability vector C.

Iteration #9: the interactions from v0 day #7 flow to stage v1 day #8 at the proportion of 100%, according to probability vector A. Forecasted values of stage v0 for day #7 as a sequence-zero stage are populated. The interactions that were in stage v1 day #6, having spent two days in that stage, are now eligible to entirely flow to stage v3 due to probability vector B. The interactions that were in stage v3 day #6, having spent two days in that stage, are now eligible to flow 50% to stage v5 due to probability vector C. Additionally, of the 50% of interactions that were in stage v3 on day #5, having spent three days in that stage, 50% of those are now eligible to also flow to v5 due to probability vector C.

For simplicity sake, the above example presented for iteration 0 through 9 ignored historical data before day 0 (before the forecast start date) in order to convey the idea of flushing volumes through multiple stages and periods. With historical data prior to day #0, each iteration must also consider the volumes from the historical data series and perform the same 'volume-flushing' process upon those volumes: start by going backwards from forecast start data minus one period, then minus two periods, minus three periods, etc. The same probability vectors govern.

Control is passed to operation 320 and the process 300 continues.

In operation 320, the model is validated. For validation, a portion of historical data is withheld. For example, 10% may be withheld. The other 90% of the historical data will be used to train/build the model. The model is then used to generate predictions that will be compared to the withheld data. Average Prediction Errors can be determined and used as KPI. The prediction may be determined as the Actual Value subtracted from the Predicted value. This is done for each data point. The Average is then taken across all of the data points to obtain the average prediction error. A cross validation is performed in which the withheld historical data is from a different period or range, and the training data is from a subset from different periods. The average prediction errors are also determined for each of the cross-validation scenarios. Standard deviation of errors may also be presented. Control is passed to operation 325 and the process 300 continues.

In operation 325, the model is calibrated, and the process ends. Once the validation step has been completed, recalibrations of the predictions model is to be performed to minimize prediction errors. This may be performed using any standard procedures known in the art.

In an embodiment, the model comprises workload generated from the volume of interactions as a customer progresses through stages and includes predicted abandons within the customer journey. Predictions made using the model include the resources (e.g., full-time equivalent agents) required to handle the workload in order to deliver KPI metric targets (e.g. service level, NPS, abandonment) for the contact center. The model may be applied to the journey analytics platform of the contact center.

### Computer systems

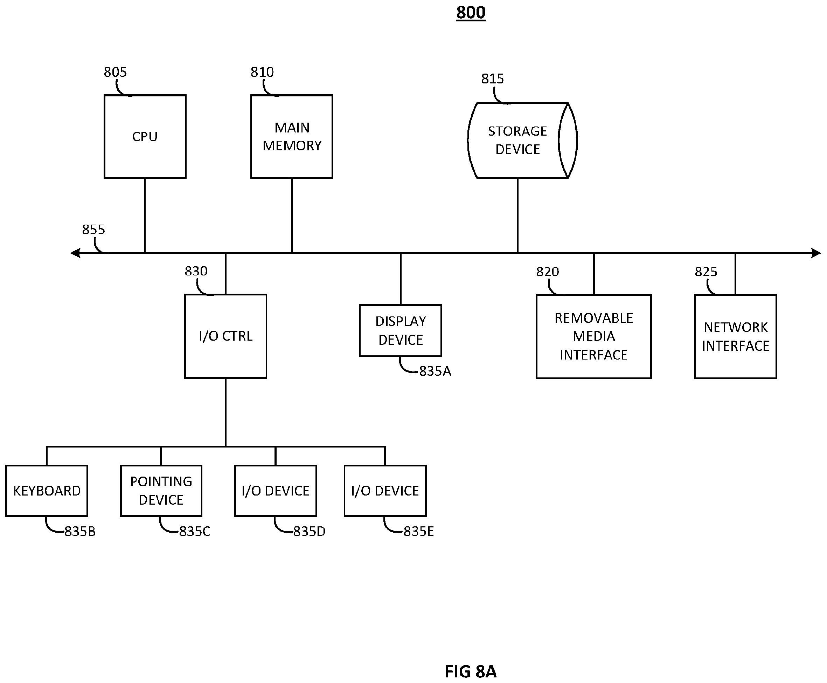

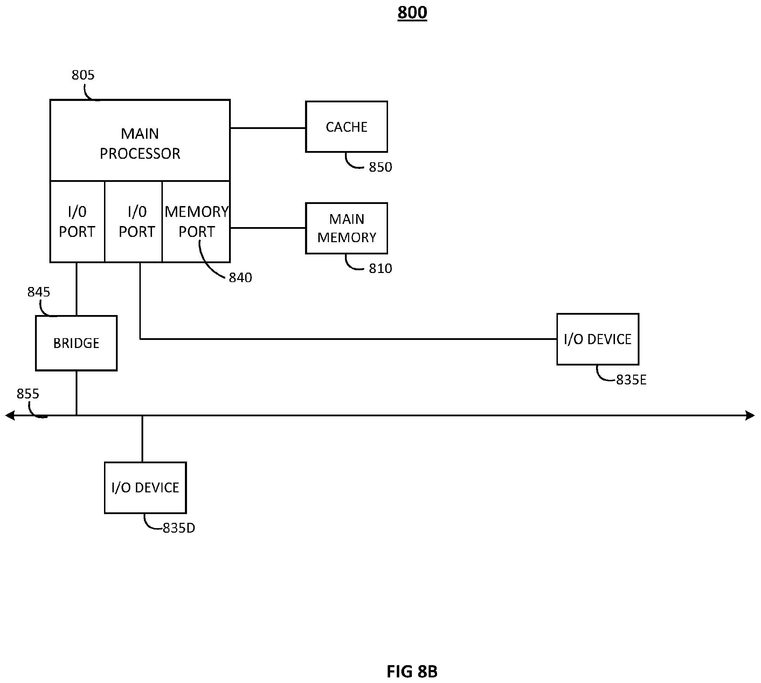

In an embodiment, each of the various servers, controls, switches, gateways, engines, and/or modules (collectively referred to as servers) in the described figures are implemented via hardware or firmware (e.g., ASIC) as will be appreciated by a person of skill in the art. Each of the various servers may be a process or thread, running on one or more processors, in one or more computing devices (e.g., Figs 8A, 8B), executing computer program instructions and interacting with other system components for performing the various functionalities described herein. The computer program instructions are stored in a memory which may be implemented in a computing device using a standard memory device, such as, for example, a RAM. The computer program instructions may also be stored in other non-transitory computer readable media such as, for example, a CD-ROM, a flash drive, etc. A person of skill in the art should recognize that a computing device may be implemented via firmware (e.g., an application-specific integrated circuit), hardware, or a combination of software, firmware, and hardware. A person of skill in the art should also recognize that the functionality of various computing devices may be combined or integrated into a single computing device, or the functionality of a particular computing device may be distributed across one or more other computing devices without departing from the scope of the exemplary embodiments of the present invention. A server may be a software module, which may also simply be referred to as a module. The set of modules in the contact center may include servers, and other modules.

The various servers may be located on a computing device on-site at the same physical location as the agents of the contact center or may be located off-site (or in the cloud) in a geographically different location, e.g., in a remote data center, connected to the contact center via a network such as the Internet. **In** addition, some of the servers may be located in a computing device on-site at the contact center while others may be located in a computing device off-site, or servers providing redundant functionality may be provided both via on-site and off-site computing devices to provide greater fault tolerance. **In** some embodiments, functionality provided by servers located on computing devices off-site may be accessed and provided over a virtual private network (VPN) as if such servers were on-site, or the functionality may be provided using a software as a service (SaaS) to provide functionality over the internet using various protocols, such as by exchanging data using encoded in extensible markup language (XML) or JSON.

Figures 8A and 8B are diagrams illustrating an embodiment of a computing device as may be employed in an embodiment of the invention, indicated generally at 800. Each computing device 800 includes a CPU 805 and a main memory unit 810. As illustrated in Figure 8A, the computing device 800 may also include a storage device 815, a removable media interface 820, a network interface 825, an input/output (I/O) controller 830, one or more display devices 835A, a keyboard 835B and a pointing device 835C (e.g., a mouse). The storage device 815 may include, without limitation, storage for an operating system and software. As shown in Figure 8B, each computing device 800 may also include additional optional elements, such as a memory port 840, a bridge 845, one or more additional input/output devices 835D, 835E, and a cache memory 850 in communication with the CPU 805. The input/output devices 835A, 835B, 835C, 835D, and 835E may collectively be referred to herein as 835.

The CPU 805 is any logic circuitry that responds to and processes instructions fetched from the main memory unit 810. It may be implemented, for example, in an integrated circuit, in the form of a microprocessor, microcontroller, or graphics processing unit, or in a field-programmable gate array (FPGA) or application-specific integrated circuit (ASIC). The main memory unit 810 may be one or more memory chips capable of storing data and allowing any storage location to be directly accessed by the central processing unit 805. As shown in Figure 8A, the central processing unit 805 communicates with the main memory 810 via a system bus 855. As shown in Figure 8B, the central processing unit 805 may also communicate directly with the main memory 810 via a memory port 840.

**In** an embodiment, the CPU 805 may include a plurality of processors and may provide functionality for simultaneous execution of instructions or for simultaneous execution of one instruction on more than one piece of data. **In** an embodiment, the computing device 800 may include a parallel processor with one or more cores. **In** an embodiment, the computing device 800 comprises a shared memory parallel device, with multiple processors and/or multiple processor cores, accessing all available memory as a single global address space. **In** another embodiment, the computing device 800 is a distributed memory parallel device with multiple processors each accessing local memory only. The computing device 800 may have both some memory which is shared and some which may only be accessed by particular processors or subsets of processors. The CPU 805 may include a multicore microprocessor, which combines two or more independent processors into a single package, e.g., into a single integrated circuit (IC). For example, the computing device 800 may include at least one CPU 805 and at least one graphics processing unit.

In an embodiment, a CPU 805 provides single instruction multiple data (SIMD) functionality, e.g., execution of a single instruction simultaneously on multiple pieces of data. In another embodiment, several processors in the CPU 805 may provide functionality for execution of multiple instructions simultaneously on multiple pieces of data (MIMD). The CPU 805 may also use any combination of SIMD and MIMD cores in a single device.

Figure 8B depicts an embodiment in which the CPU 805 communicates directly with cache memory 850 via a secondary bus, sometimes referred to as a backside bus. In other embodiments, the CPU 805 communicates with the cache memory 850 using the system bus 855. The cache memory 850 typically has a faster response time than main memory 810. As illustrated in Figure 8A, the CPU 805 communicates with various I/O devices 835 via the local system bus 855. Various buses may be used as the local system bus 855, including, but not limited to, a Video Electronics Standards Association (VESA) Local bus (VLB), an Industry Standard Architecture (ISA) bus, an Extended Industry Standard Architecture (EISA) bus, a Micro Channel Architecture (MCA) bus, a Peripheral Component Interconnect (PCI) bus, a PCI Extended (PCI-X) bus, a PCI-Express bus, or a NuBus. For embodiments in which an I/O device is a display device 835A, the CPU 805 may communicate with the display device 835A through an Advanced Graphics Port (AGP). Figure 8B depicts an embodiment of a computer 800 in which the CPU 805 communicates directly with I/O device 835E. Figure 8B also depicts an embodiment in which local buses and direct communication are mixed: the CPU 805 communicates with I/O device 835D using a local system bus 855 while communicating with I/O device 835E directly.

A wide variety of I/O devices 835 may be present in the computing device 800. Input devices include one or more keyboards 835B, mice, trackpads, trackballs, microphones, and drawing tables, to name a few non-limiting examples. Output devices include video display devices 835A, speakers and printers. An I/O controller 830 as shown in Figure 8A, may control the one or more I/O devices, such as a keyboard 835B and a pointing device 835C (e.g., a mouse or optical pen), for example.

Referring again to Figure 8A, the computing device 800 may support one or more removable media interfaces 820, such as a floppy disk drive, a CD-ROM drive, a DVD-ROM drive, tape drives of various formats, a USB port, a Secure Digital or COMPACT FLASH^{™} memory card port, or any other device suitable for reading data from read-only media, or for reading data from, or writing data to, read-write media. An I/O device 835 may be a bridge between the system bus 855 and a removable media interface 820.

The removable media interface 820 may, for example, be used for installing software and programs. The computing device 800 may further include a storage device 815, such as one or more hard disk drives or hard disk drive arrays, for storing an operating system and other related software, and for storing application software programs. Optionally, a removable media interface 820 may also be used as the storage device. For example, the operating system and the software may be run from a bootable medium, for example, a bootable CD.

In an embodiment, the computing device 800 may include or be connected to multiple display devices 835A, which each may be of the same or different type and/or form. As such, any of the I/O devices 835 and/or the I/O controller 830 may include any type and/or form of suitable hardware, software, or combination of hardware and software to support, enable or provide for the connection to, and use of, multiple display devices 835A by the computing device 800. For example, the computing device 800 may include any type and/or form of video adapter, video card, driver, and/or library to interface, communicate, connect or otherwise use the display devices 835A. In an embodiment, a video adapter may include multiple connectors to interface to multiple display devices 835A. In another embodiment, the computing device 800 may include multiple video adapters, with each video adapter connected to one or more of the display devices 835A. In other embodiments, one or more of the display devices 835A may be provided by one or more other computing devices, connected, for example, to the computing device 800 via a network. These embodiments may include any type of software designed and constructed to use the display device of another computing device as a second display device 835A for the computing device 800. One of ordinary skill in the art will recognize and appreciate the various ways and embodiments that a computing device 800 may be configured to have multiple display devices 835A.

An embodiment of a computing device indicated generally in Figures 8A and 8B may operate under the control of an operating system, which controls scheduling of tasks and access to system resources. The computing device 800 may be running any operating system, any embedded operating system, any real-time operating system, any open source operation system, any proprietary operating system, any operating systems for mobile computing devices, or any other operating system capable of running on the computing device and performing the operations described herein.

The computing device 800 may be any workstation, desktop computer, laptop or notebook computer, server machine, handled computer, mobile telephone or other portable telecommunication device, media playing device, gaming system, mobile computing device, or any other type and/or form of computing, telecommunications or media device that is capable of communication and that has sufficient processor power and memory capacity to perform the operations described herein. In some embodiments, the computing device 800 may have different processors, operating systems, and input devices consistent with the device.

In other embodiments, the computing device 800 is a mobile device. Examples might include a Java-enabled cellular telephone or personal digital assistant (PDA), a smart phone, a digital audio player, or a portable media player. In an embodiment, the computing device 800 includes a combination of devices, such as a mobile phone combined with a digital audio player or portable media player.

A computing device 800 may be one of a plurality of machines connected by a network, or it may include a plurality of machines so connected. A network environment may include one or more local machine(s), client(s), client node(s), client machine(s), client computer(s), client device(s), endpoint(s), or endpoint node(s) in communication with one or more remote machines (which may also be generally referred to as server machines or remote machines) via one or more networks. In an embodiment, a local machine has the capacity to function as both a client node seeking access to resources provided by a server machine and as a server machine providing access to hosted resources for other clients. The network may be LAN or WAN links, broadband connections, wireless connections, or a combination of any or all of the above. Connections may be established using a variety of communication protocols. In one embodiment, the computing device 800 communicates with other computing devices 800 via any type and/or form of gateway or tunneling protocol such as Secure Socket Layer (SSL) or Transport Layer Security (TLS). The network interface may include a built-in network adapter, such as a network interface card, suitable for interfacing the computing device to any type of network capable of communication and performing the operations described herein. An I/O device may be a bridge between the system bus and an external communication bus.

In an embodiment, a network environment may be a virtual network environment where the various components of the network are virtualized. For example, the various machines may be virtual machines implemented as a software-based computer running on a physical machine. The virtual machines may share the same operating system. In other embodiments, different operating system may be run on each virtual machine instance. In an embodiment, a "hypervisor" type of virtualizing is implemented where multiple virtual machines run on the same host physical machine, each acting as if it has its own dedicated box. The virtual machines may also run on different host physical machines.

Other types of virtualization are also contemplated, such as, for example, the network (e.g., via Software Defined Networking (SDN)). Functions, such as functions of session border controller and other types of functions, may also be virtualized, such as, for example, via Network Functions Virtualization (NFV).

In an embodiment, the use of LSH to automatically discover carrier audio messages in a large set of pre-connected audio recordings may be applied in the support process of media services for a contact center environment. For example, this can assist with the call analysis process for a contact center and removes the need to have humans listen to a large set of audio recordings to discover new carrier audio messages.

While the invention has been illustrated and described in detail in the drawings and foregoing description, the same is to be considered as illustrative and not restrictive in character, it being understood that only the preferred embodiment has been shown and described.

## Claims

1. A computer implemented method for routing an inbound interaction from an end user device (105) in a contact center environment (100) to an agent device (145), **characterised in that** the method comprises:
selecting, by a routing server (130) operatively coupled to a network (110) using routing parameters provided by a statistics server (140) operatively coupled to the network (110), an agent device (145) for routing the inbound interaction, wherein the routing parameters are calculated from historical data and the selection comprises the following steps:
extracting, by a processor operatively coupled to the network (110), the historical data from a database (135) operatively coupled to the network (110), wherein the historical data comprises a plurality of stage levels representative of time a contact center resource spends servicing a stage level in a customer journey;
pre-processing the historical data, wherein the pre-processing further comprises deriving adjacency graphs, deriving sequence-zeros, and deriving stage-histories, for each stage level such that the pre-processed data comprises probability vectors approximating stage paths;
determining stage-predictions using the pre-processed historical data and constructing a predictions model, wherein the stage-prediction comprises the steps of:
running an algorithm which runs iterations of the historical data to flush volumes, determined by the probability vectors, through multiple stages and periods;
withholding a portion of historical data for validation, resulting in a remaining portion;
using the remaining portion to build and train the predictions model; and
calibrating the predictions model; and
selecting, by the processor, an agent using the constructed model;
routing, by the routing server (130), the interaction to the agent device (145) of the selected agent and
making a connection between the end user device (105) and the agent device (145).

2. The method of claim 1, wherein the stage levels comprise points of focus of the customer journey and transitions from each stage in the customer journey.

3. The method of claim 1, wherein the extracting is triggered by one of the following: user action, scheduled job, and queue request from another service.

4. The method of claim 1, wherein the adjacency graphs model graph connections among stages.

5. The method of claim 1, wherein a sequence-zero comprises a first stage of a chain of a progression of sequences.

6. The method of claim 1, wherein a stage-history comprises a property for each stage comprising historical vector count, abandon rate, and probability vector matrix.

7. The method of claim 1, wherein flushing volumes comprises working backwards from forecast start date minus one period and repeating with each repetition increasing each period by one.

## Patentansprüche

1. Computerimplementiertes Verfahren zum Routen einer eingehenden Interaktion von einer Endbenutzervorrichtung (105) in einer Kontaktcenterumgebung (100) an eine Agentenvorrichtung (145), **dadurch gekennzeichnet, dass** das Verfahren Folgendes umfasst:
Auswählen einer Agentenvorrichtung (145) zum Routen der eingehenden Interaktion durch einen an ein Netzwerk (110) wirkgekoppelten Routing-Server (130) unter Verwendung von Routing-Parametern, die von einem an das Netzwerk (110) wirkgekoppelten Statistikserver (140) bereitgestellt werden, wobei die Routing-Parameter anhand von historischen Daten berechnet werden und die Auswahl die folgenden Schritte umfasst:
Extrahieren der historischen Daten aus einer an das Netzwerk (110) wirkgekoppelten Datenbank (135) durch einen an das Netzwerk (110) wirkgekoppelten Prozessor, wobei die historischen Daten eine Vielzahl von Etappenebenen umfassen, die eine Zeit darstellen, die eine Kontaktcenterressource zum Abarbeiten einer Etappenebene eines Kundenwegs benötigt;
Vorverarbeiten der historischen Daten, wobei das Vorverarbeiten ferner Ableiten von Adjazenzgraphen, Ableiten von Sequenznullen und Ableiten von Etappenverläufen für jede Etappenebene derart umfasst, dass die vorverarbeiteten Daten Wahrscheinlichkeitsvektoren umfassen, die Etappenwege approximieren;
Bestimmen von Etappenvorhersagen unter Verwendung der vorverarbeiteten historischen Daten und Konstruieren eines Vorhersagemodells, wobei die Etappenvorhersage die folgenden Schritte umfasst:
Ausführen eines Algorithmus, der Iterationen der historischen Daten ausführt, um durch die Wahrscheinlichkeitsvektoren bestimmte Volumina durch mehrere Etappen und Perioden zu glätten;
Zurückhalten eines Teils der historischen Daten zur Validierung, was zu einem verbleibenden Teil führt;
Verwenden des verbleibenden Teils zum Aufbauen und Trainieren des Vorhersagemodells; und
Kalibrieren des Vorhersagemodells; und
Auswählen eines Agenten durch den Prozessor unter Verwendung des konstruierten Modells;
Routen der Interaktion an die Agentenvorrichtung (145) des ausgewählten Agenten durch den Routing-Server (130) und
Herstellen einer Verbindung zwischen der Endbenutzervorrichtung (105) und der Agentenvorrichtung (145).

2. Verfahren nach Anspruch 1, wobei die Etappenebenen zentrale Punkte des Kundenwegs und Übergänge jeder Etappe des Kundenwegs umfassen.

3. Verfahren nach Anspruch 1, wobei das Extrahieren durch eines der Folgenden ausgelöst wird: Benutzeraktion, geplanter Auftrag und Warteschlangenanforderung von einem anderen Dienst.

4. Verfahren nach Anspruch 1, wobei die Adjazenzgraphen Graphverbindungen zwischen Etappen modellieren.

5. Verfahren nach Anspruch 1, wobei eine Sequenznull eine erste Etappe einer Kette eines Ablaufs von Sequenzen umfasst.

6. Verfahren nach Anspruch 1, wobei ein Etappenverlauf eine Eigenschaft für jede Etappe umfasst, umfassend eine Zahl historischer Vektoren, eine Abbruchrate und eine Wahrscheinlichkeitsvektormatrix.

7. Verfahren nach Anspruch 1, wobei Glätten von Volumina Rückwärtsarbeiten von einem Vorhersagestartdatum abzüglich einer Periode und Wiederholen umfasst, wobei jede Wiederholung jede Periode um eins erhöht.

## Revendications

1. Procédé mis en œuvre par ordinateur pour l'acheminement d'une interaction entrante depuis un dispositif d'utilisateur final (105) dans un environnement de centre de contact (100) vers un dispositif d'agent (145), **caractérisé en ce que** le procédé comprend :
la sélection, par un serveur d'acheminement (130) couplé de manière opérationnelle à un réseau (110) à l'aide de paramètres d'acheminement fournis par un serveur de statistiques (140) couplé de manière opérationnelle au réseau (110), d'un dispositif d'agent (145) pour l'acheminement de l'interaction entrante, dans lequel les paramètres d'acheminement sont calculés à partir de données d'historique et la sélection comprend les étapes suivantes :
l'extraction, par un processeur couplé de manière opérationnelle au réseau (110), des données d'historique à partir d'une base de données (135) couplée de manière opérationnelle au réseau (110), dans lequel les données d'historique comprennent une pluralité de niveaux de phase représentatifs du temps qu'une ressource de centre de contact passe à traiter un niveau de phase dans un voyage client ;
le prétraitement des données d'historique, dans lequel le prétraitement comprend en outre la dérivation de graphes d'adjacence, la dérivation de séquences-zéro et la dérivation d'historiques de phase, pour chaque niveau de phase de telle sorte que les données prétraitées comprennent des vecteurs de probabilité fournissant une approximation de trajets de phase ;
la détermination de prédictions de phase à l'aide des données d'historique prétraitées et la construction d'un modèle de prédictions, dans lequel la prédiction de phase comprend les étapes suivantes :
l'exécution d'un algorithme qui exécute des itérations des données d'historique pour le passage de volumes, déterminés par les vecteurs de probabilité, à travers de multiples phases et périodes ;
la mise en réserve d'une partie de données d'historique pour validation, résultant en une partie restante ;
l'utilisation de la partie restante pour construire et entraîner le modèle de prédictions ; et
l'étalonnage du modèle de prédictions ; et
la sélection, par le processeur, d'un agent à l'aide du modèle construit ;
l'acheminement, par le serveur d'acheminement (130), de l'interaction vers le dispositif d'agent (145) de l'agent sélectionné ; et
l'établissement d'une connexion entre le dispositif d'utilisateur final (105) et le dispositif d'agent (145).

2. Procédé selon la revendication 1, dans lequel les niveaux de phase comprennent des points d'intérêt du voyage client et des transitions depuis chaque phase dans le voyage client.

3. Procédé selon la revendication 1, dans lequel l'extraction est déclenchée par l'un des éléments suivants : une action d'utilisateur, une tâche planifiée et une requête de file d'attente provenant d'un autre service.

4. Procédé selon la revendication 1, dans lequel les graphes d'adjacence modélisent des connexions de graphe entre des phases.

5. Procédé selon la revendication 1, dans lequel une séquence-zéro comprend une première phase d'une chaîne d'une progression de séquences.

6. Procédé selon la revendication 1, dans lequel un historique de phase comprend une propriété pour chaque phase comprenant un nombre de vecteurs d'historique, un taux d'abandon et une matrice de vecteurs de probabilité.

7. Procédé selon la revendication 1, dans lequel le passage de volumes comprend le fait de travailler à rebours à partir d'une date de début de prévision moins une période et de répéter, chaque répétition augmentant chaque période d'une unité.
